# EUROPÄISCHE PATENTSCHRIFT

(11) **EP 3 601 041 B1**
(45) Veröffentlichungstag und Bekanntmachung des Hinweises auf die Patenterteilung: **27.12.2023**
(21) Anmeldenummer: 18713618.9
(22) Anmeldetag: 22.03.2018
(51) Int. Cl.: B64C 39/02, G05B 19/418

(54) **AUTOMATISIERUNGSSYSTEM UND VERFAHREN ZUM BETREIBEN EINES AUTOMATISIERUNGSSYSTEMS**
AUTOMATION SYSTEM AND METHOD FOR OPERATING AN AUTOMATION SYSTEM
SYSTÈME D'AUTOMATISATION ET PROCÉDÉ POUR FAIRE FONCTIONNER UN SYSTÈME D'AUTOMATISATION

(30) Priorität: 31.03.2017 DE 102017106996
(43) Veröffentlichungstag der Anmeldung: 05.02.2020
(73) Patentinhaber: Beckhoff Automation GmbH, 33415 Verl (DE)
(72) Erfinder: BECKHOFF, Hans, 33415 Verl (DE)
(74) Vertreter: Patentanwaltskanzlei WILHELM & BECK
(86) Internationale Anmeldenummer: PCT/EP2018/057270
(87) Internationale Veröffentlichungsnummer: WO 2018/177873

(56) Entgegenhaltungen:
- EP-A1- 3 135 441
- WO-A1-2016/193667
- DE-A1-102015 115 184

## Beschreibung

Die Erfindung betrifft ein Automatisierungssystem. Die Erfindung betrifft ferner ein Verfahren zum Betreiben eines Automatisierungssystems.

Die Offenlegungsschrift DE 10 2014 201 203 A1 beschreibt ein Zusammenwirken eines landwirtschaftlichen Arbeitsfahrzeugs mit einer zugehörigen Drohne, wobei mittels Sensordaten der Drohne eine Anpassung der Aktoreneinstellungen des Arbeitsfahrzeuges vorgenommen wird. Es wird die Möglichkeit eines automatischen Akkutauschs oder einer anderen Einrichtung zur Übertragung von elektrischer Energie vom Arbeitsfahrzeug auf die Drohne beschrieben.

Die Offenlegungsschrift DE 10 2014 218 749 A1 beschreibt ein Verfahren zum Unterstützen eines Betriebs einer Arbeitsmaschine, beispielsweise eines Baggers. Es ist ein Erzeugen von Bilddaten eines Endeffektors und/oder eines von dem Endeffektor manipulierten Objektes mittels einer Kamera eines unbemannten Flugobjektes vorgesehen. Die Bilddaten werden an eine Anzeigeeinrichtung übermittelt, die an der Arbeitsmaschine angeordnet ist.

Die Offenlegungsschrift DE 10 2014 224 884 A1 zeigt ein Verfahren und ein System zum Überwachen von Prozessen und/oder Betriebszuständen in Logistikeinrichtungen. Das bekannte System umfasst ein unbemanntes Fluggerät mit wenigstens einem Sensor, wenigstens einer Datenverarbeitungsanlage und wenigstens einer Ausgabevorrichtung. Das bekannte Verfahren umfasst ein Erfassen eines Ist-Zustands wenigstens einer Kenngröße in der Logistikeinrichtung mittels des wenigstens einen Sensors des wenigstens einen Fluggeräts. Die den Ist-Zustand repräsentierenden Daten werden an die Datenverarbeitungsanlage übertragen. Diese verarbeitet die Daten.

Die Offenlegungsschrift DE 10 2015 104 052 A1 beschreibt ein Verfahren zum Überbringen einer Sendung durch eine unbemannte Transporteinrichtung.

Die Gebrauchsmusterschrift DE 20 2014 006 541 U1 beschreibt ein unbemanntes Fluggerät zur Durchführung einer Widerstands-, Strom- und/oder Spannungsmessung an einem Objekt, insbesondere einer Blitzschutzmessung an einer Windenergieanlage.

Die Patentschrift EP 2 697 604 B1 beschreibt ein Vermessungssystem zur Bestimmung von 3D-Koordinaten unter Verwendung eines unbemannten Fluggeräts. DE 10 2015 115184 A1 beschreibt eine Vorrichtung zum Behandeln von Behältnissen und/oder Verpackungen mit einer ersten Behandlungseinrichtung, welche die Behältnisse und/ oder Verpackungen in einer ersten vorgegebenen Weise behandelt, mit einer zweiten Behandlungseinrichtung, welche die Behältnisse und/ oder Verpackungen in einer zweiten vorgegebenen Weise behandelt und mit einer Transporteinrichtung zum Transportieren der Behältnisse und/oder Verpackungen und mit einer Überwachungseinrichtung zum Überwachen der Vorrichtung. Die Überwachungseinrichtung weist ein unbemanntes und ferngesteuertes Fluggerät auf sowie eine Steuerungseinrichtung zum drahtlosen Steuern dieses Fluggeräts, wobei das Fluggerät eine Bildaufnahmeeinrichtung aufweist und wobei die Vorrichtung eine Begrenzungseinrichtung aufweist, welche einen Flugbereich des Fluggeräts begrenzt.

Die der Erfindung zugrundeliegende Aufgabe ist darin zu sehen, ein Konzept zum effizienten Betreiben eines Automatisierungssystems bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Automatisierungssystem gemäß Anspruch 1 bereitgestellt.

Nach einem anderen Aspekt wird ein Verfahren zum Betreiben des Automatisierungssystems gemäss Anspruch 11 bereitsgestellt. Die Erfindung basiert auf der Erkenntnis, dass die obige Aufgabe dadurch gelöst werden kann, dass zur Steuerung des unbemannten Luftfahrzeugs genau die Steuerungseinrichtung verwendet wird, die auch die (zumindest eine) Maschine des Automatisierungssystems steuert. Dadurch wird eine effiziente Nutzung der Steuerungseinrichtung bewirkt. Dies deshalb, da diese zum einen die (zumindest eine) Maschine des Automatisierungssystems steuert. Zum anderen steuert diese auch zusätzlich das unbemannte Luftfahrzeug.

Die Steuerungseinrichtung ist ausgebildet, sowohl die zumindest eine Maschine zu steuern als auch das unbemannte Luftfahrzeug.

Das heißt also , dass die Steuerungseinrichtung des Automatisierungssystems eine Doppelfunktion aufweist: Steuerung der Maschine des Automatisierungssystems und Steuerung des unbemannten Luftfahrzeugs.

Dadurch also, dass die Steuerungseinrichtung parallel zur Steuerung der Maschine auch die Steuerung des unbemannten Luftfahrzeugs übernimmt, liegt in vorteilhafter Weise ein autarkes System vor.

Dadurch, dass die Steuerungseinrichtung das unbemannte Luftfahrzeug derart steuert, dass diese einen Betrieb der (zumindest einen) Maschine unterstützt, wird insbesondere der technische Vorteil bewirkt, dass die Maschine effizient in ihrem Betrieb unterstützt werden kann.

Somit wird also insbesondere der technische Vorteil bewirkt, dass das Automatisierungssystem effizient betrieben werden kann. Insofern wird der technische Vorteil bewirkt, dass ein effizientes Konzept zum effizienten Betreiben eines Automatisierungssystems bereitgestellt ist.

In einer Ausführungsform umfasst die Steuerungseinrichtung einen oder mehrere Prozessoren, welcher oder welche das Computerprogramm ausführen können respektive welcher oder welche das Computerprogramm ausführen.

In einer Ausführungsform umfasst die Steuerungseinrichtung einen oder mehrere Speicher, in welchem oder in welchen das Computerprogramm oder zumindest Teile davon gespeichert werden können respektive gespeichert sind.

Das Automatisierungssystem umfasst die zumindest eine Maschine.

Das unbemannte Luftfahrzeug umfasst nach einer Ausführungsform eine eigene Flugsteuerung zum Steuern eines Flugmodus, insbesondere zum Steuern einer Flugbewegung.

In einer Ausführung ist vorgesehen, dass Flugkommandos für das Luftfahrzeug von der Steuerungseinrichtung an die Flugsteuerung gesandt werden, beispielsweise drahtlos, also beispielsweise per Funk, gesandt werden.

Das Luftfahrzeug erhält seine Flugbefehle von der Maschinen- oder Anlagensteuerung, also von der Steuerungseinrichtung, und wird so zu einem funktionalen Bestandteil der Maschine oder Anlage, allgemein des Automatisierungssystems. Die Steuerungseinrichtung kann als eine Maschinensteuerung und/oder als eine Anlagensteuerung bezeichnet werden. Das erfindungsgemäße Konzept sieht also vor, die Maschinensteuerung der Maschine zusätzlich zur Steuerung der Maschine auch zur Steuerung des unbemannten Luftfahrzeugs zu verwenden.

Die zumindest eine Maschine ist eine stationär angeordnete Maschine.

Die Steuerungseinrichtung ist gemäß einer Ausführungsform stationär angeordnet.

In einer nicht beanspruchten Ausführungsform ist die zumindest eine Maschine verschieden von einem, beispielweise selbstfahrenden, Fahrzeug. Das Fahrzeug ist zum Beispiel ein Landfahrzeug, beispielsweise ein landwirtschaftliches Arbeitsfahrzeug, beispielsweise ein Feldhäcksler.

Im Sinne der Beschreibung ist ein landwirtschaftliches Arbeitsfahrzeug, zum Beispiel ein Feldhäcksler, verschieden von einem Automatisierungssystem. Ein Automatisierungssystem ist also kein landwirtschaftliches Arbeitsfahrzeug respektive umfasst kein landwirtschaftliches Arbeitsfahrzeug, ist also frei von einem landwirtschaftlichen Arbeitsfahrzeug.

In einer nicht beanspruchten Ausführungsform ist die Steuerungseinrichtung räumlich getrennt von der zumindest einen Maschine angeordnet. Die zumindest eine Maschine und die Steuerungseinrichtung sind also beispielsweise beabstandet voneinander angeordnet. Die zumindest eine Maschine umfasst gemäß einer Ausführungsform nicht die Steuerungseinrichtung. Das heißt also insbesondere, dass die zumindest eine Maschine gemäß einer Ausführungsform frei von der Steuerungseinrichtung ist.

Ein unbemanntes Luftfahrzeug im Sinne der Beschreibung kann auch als eine Drohne bezeichnet werden.

Nach einer Ausführungsform ist das unbemannte Luftfahrzeug eines der folgenden Luftfahrzeuge: Flugzeug, Drehflügler, insbesondere Hubschrauber, Quadrocopter, Octocopter, Luftschiff.

Nach einer Ausführungsform ist vorgesehen, dass die Steuerungseinrichtung eine speicherprogrammierbare Steuerung ist. Eine speicherprogrammierbare Steuerung wird im Englischen als "Programmable Logic Controller (PLC)" bezeichnet. Im Deutschen kann die speicherprogrammierbare Steuerung auch durch "SPS" abgekürzt werden.

Dadurch wird zum Beispiel der technische Vorteil bewirkt, dass eine effiziente und flexible Programmierung der Steuerung ermöglicht ist.

Die Formulierung "zumindest eine Maschine" umfasst insbesondere die Formulierung "eine oder mehrere Maschinen". Das heißt also insbesondere, dass beispielsweise mehrere Maschinen vorgesehen sind.

Bei mehreren Maschinen sind diese beispielsweise gleich oder beispielsweise unterschiedlich ausgebildet.

Die Maschinen oder die mehreren Maschinen sind beispielsweise Teil einer Anlage oder mehrerer Anlagen.

Ausführungen, die im Zusammenhang mit einer Maschine gemacht sind, gelten analog für mehrere Maschinen und umgekehrt.

In der Formulierung "die Maschine" soll stets die Formulierung "die zumindest eine Maschine" mitgelesen werden.

Die Formulierung "zumindest ein unbemanntes Luftfahrzeug" umfasst insbesondere die Formulierung "ein oder mehrere unbemannte Luftfahrzeuge". Das heißt also insbesondere, dass beispielsweise mehrere Luftfahrzeuge vorgesehen sind.

Bei mehreren unbemannten Luftfahrzeugen sind diese beispielsweise gleich oder beispielsweise unterschiedlich ausgebildet. Ausführungen, die im Zusammenhang mit einem Luftfahrzeug gemacht sind, gelten analog für mehrere Luftfahrzeuge und umgekehrt.

In der Formulierung "das (unbemannte) Luftfahrzeug" soll stets die Formulierung "das zumindest eine (unbemannte) Luftfahrzeug" mitgelesen werden.

In einer Ausführungsform ist vorgesehen, dass die Steuerungseinrichtung ausgebildet ist, das unbemannte Luftfahrzeug in Abhängigkeit von der Steuerung der Maschine zu steuern. Dadurch wird zum Beispiel der technische Vorteil bewirkt, dass das unbemannte Luftfahrzeug effizient gesteuert werden kann. Gemäß dieser Ausführungsform ist also vorgesehen, dass zur Steuerung des unbemannten Luftfahrzeugs die Steuerung der Maschine mittels der Steuerungseinrichtung berücksichtigt wird.

Dadurch wird also beispielsweise der technische Vorteil bewirkt, dass ein effizientes Zusammenspiel zwischen Maschine und Luftfahrzeug bewirkt werden kann.

Die Prozesse, die mittels der Maschine durchgeführt werden, können so effizient auf den Betrieb des unbemannten Luftfahrzeugs abgestimmt werden und umgekehrt.

In einer Ausführungsform umfasst das Steuern ein Synchronisieren einer Fluggeschwindigkeit des unbemannten Luftfahrzeugs mit einer Fördergeschwindigkeit eines Förderbands.

Gemäß einer Ausführungsform ist vorgesehen, dass die Steuerungseinrichtung ausgebildet ist, Steuerungsdaten zur Steuerung des unbemannten Luftfahrzeugs für das unbemannte Luftfahrzeug zu ermitteln, wobei die Steuerungsdaten eine mittels des unbemannten Luftfahrzeugs auszuführende Aufgabe zur Unterstützung des Betriebs der Maschine angeben, wobei das unbemannte Luftfahrzeug ausgebildet ist, die auszuführende Aufgabe basierend auf den Steuerungsdaten mittels der Steuerungseinrichtung ferngesteuert auszuführen.

Dadurch wird zum Beispiel der technische Vorteil bewirkt, dass die auszuführende Aufgabe effizient durchgeführt werden kann.

Sofern beispielsweise die Steuerungseinrichtung das unbemannte Luftfahrzeug basierend auf den Steuerungsdaten fernsteuert, damit dieses die auszuführende Aufgabe ausführt, wird beispielsweise der technische Vorteil bewirkt, dass über die Fernsteuerung weiter eine effiziente Kontrolle über das unbemannte Luftfahrzeug bewirkt werden kann.

In der Regel ist es ferner so, dass ein fernsteuerbares Luftfahrzeug weniger komplex ausgebildet sein muss, als ein Luftfahrzeug, welches autonom betrieben werden kann. Durch das Vorsehen einer Fernsteuerungsmöglichkeit, wird also insbesondere der technische Vorteil bewirkt, dass eine technische Komplexität reduziert werden kann.

Gemäß einer Ausführungsform ist vorgesehen, dass die Aufgabe eine oder mehrere der folgenden Aufgaben umfasst: Transportieren eines Gegenstands zu der Maschine, Transportieren eines Gegenstands von der Maschine zu einem vorbestimmten Ort, Abholen eines Gegenstands von einem vorbestimmten Ort und Transportieren des Gegenstands zu der Maschine, Prüfen zumindest einer Eigenschaft eines mittels der Maschine hergestellten Produkts, Reparieren und/oder Nachbearbeiten eines mittels der Maschine hergestellten fehlerhaften Produkts, Auffüllen einer mittels der Maschine nicht vollständig aufgefüllten Verpackungseinheit, Einschleusen und/oder Tauschen einer Reihenfolge von mittels der Maschine zu bearbeitenden Gegenständen, Erfassen der Maschine und/oder eines Umfelds der Maschine mittels eines Umfeldsensors des unbemannten Luftfahrzeugs und Übermitteln der Erfassung entsprechender Umfeldsensordaten an die Steuerungseinrichtung.

Gemäß Anspruch 1 umfasst die Maschine eine oder mehrere Bewegungsachsen, die mittels der Steuerungseinrichtung, beispielsweise unter Ausführung einer Steuerungssoftware, gesteuert respektive kontrolliert werden.

Gemäß Anspruch 1 ist vorgesehen, dass das Luftfahrzeug als eine weitere Bewegungsachse wirkt respektive als eine weitere Bewegungsachse verwendet wird. Das heißt, dass das Luftfahrzeug mittels der Steuerungseinrichtung als eine weitere Bewegungsachse in die Steuerung der Maschine mit eingebunden wird.

Zum besseren Verständnis, was die vorliegende Erfindung unter einer Bewegungsachse versteht, soll folgendes Beispiel dienen:
Gemäß einer nicht beanspruchten Ausführungsform ist die Maschine ein lineares Antriebssystem, welches mehrere Schlitten antreibt respektive antreiben kann, die auf einer Schiene geführt sind. Jeder Schlitten ist für die Steuerungseinrichtung eine eigene Bewegungsachse.

Insbesondere wird dadurch der technische Vorteil bewirkt, dass die vorstehend bezeichneten Aufgaben effizient durchgeführt werden können. Dies deshalb, da in der Regel ein unbemanntes Luftfahrzeug diese Aufgaben schneller durchführen kann als eine menschliche Person. So kann beispielsweise das unbemannte Luftfahrzeug auch zu Orten fliegen, die für einen Menschen nur schwer erreichbar sind.

Ferner ist es durch die Verwendung des unbemannten Luftfahrzeugs zur Durchführung dieser Aufgaben insbesondere in vorteilhafter Weise ermöglicht, dass das unbemannte Luftfahrzeug auch Aufgaben dort durchführen kann, wo es für einen Menschen zu gesundheitlichen Schäden kommen könnte.

Sofern beispielsweise das unbemannte Luftfahrzeug ein mittels der Maschine hergestelltes fehlerhaftes Produkt repariert und/oder nachbearbeitet, wird insbesondere der technische Vorteil bewirkt, dass das Produkt weiter innerhalb der Fertigungsstraße verbleiben kann und nicht aus dieser herausgenommen werden muss. Dies deshalb, da das unbemannte Luftfahrzeug das fehlerhafte Produkt noch auf der Fertigungsstraße reparieren respektive nachbearbeiten kann.

Ein Gegenstand im Sinne der Beschreibung ist beispielsweise ein von der Maschine benötigtes Werkzeug respektive Ersatzteil. Ein Gegenstand im Sinne der Beschreibung ist beispielsweise ein Halbzeug, welches mittels der Maschine verarbeitet werden soll.

Sofern also beispielsweise festgestellt wird, dass es an Halbzeugen an der Maschine mangelt, so kann das unbemannte Luftfahrzeug das fehlende Halbzeug effizient zur Maschine transportieren. Die Maschine kann somit insbesondere in vorteilhafter Weise weiterbetrieben werden. Somit wird insbesondere der technische Vorteil bewirkt, dass ein Stillstand der Maschine aufgrund fehlender Teile, beispielsweise Halbzeuge, effizient vermieden werden kann.

Gemäß einer Ausführungsform ist vorgesehen, dass das unbemannte Luftfahrzeug und/oder die Steuerungseinrichtung ausgebildet sind, eine momentane Position des unbemannten Luftfahrzeugs zu bestimmen, wobei die Steuerungseinrichtung ausgebildet ist, basierend auf der momentanen Position des unbemannten Luftfahrzeugs das unbemannte Luftfahrzeug zu steuern.

Dadurch wird insbesondere der technische Vorteil bewirkt, dass das unbemannte Luftfahrzeug effizient gesteuert werden kann.

Die Kenntnis über die momentane Position des unbemannten Luftfahrzeugs ist insbesondere von besonderer Relevanz, sofern beispielsweise mehrere unbemannte Luftfahrzeuge vorgesehen sind. Somit kann in vorteilhafter Weise vermieden werden, dass sich die mehreren Luftfahrzeuge gegenseitig behindern oder dass die mehreren Luftfahrzeuge miteinander kollidieren.

Nach einer Ausführungsform ist eine stationäre Radareinrichtung vorgesehen, die ausgebildet ist, eine momentane Position des unbemannten Luftfahrzeugs zu bestimmen. Die Steuerungseinrichtung ist beispielsweise mit der Radareinrichtung kommunikationstechnisch verbunden.

Alternativ oder zusätzlich zur stationären Radareinrichtung ist, respektive sind, gemäß einer Ausführungsform ein stationäres Kamerasystem und/oder ein anderes 3-dimensionales kontaktloses Messsystem zum Bestimmen der momentanen Position des unbemannten Luftfahrzeugs vorgesehen.

Gemäß einer Ausführungsform ist vorgesehen, dass das unbemannte Luftfahrzeug ausgebildet ist, während eines Flugs ein Umfeld des Luftfahrzeugs zu erfassen, wobei das unbemannte Luftfahrzeug und/oder die Steuerungseinrichtung ausgebildet sind, eine digitale Karte des Umfelds basierend auf dem erfassten Umfeld zu erstellen und die momentane Position des unbemannten Luftfahrzeugs innerhalb der digitalen Karte zu bestimmen.

Diese Ausführungsform basiert auf der Erkenntnis, dass die Positionsbestimmung, also insbesondere eine Lokalisierung, des unbemannten Luftfahrzeugs unter anderem auf einer Umfelderfassung basiert. Das erfasste Umfeld wird im Rahmen der Lokalisierung insbesondere mit einer digitalen Karte abgeglichen, um das Luftfahrzeug zu lokalisieren, also um insbesondere die Position des Luftfahrzeugs zu bestimmen.

Dadurch wird insbesondere der technische Vorteil bewirkt, dass die Lokalisierung, insbesondere die Positionsbestimmung, des Luftfahrzeugs effizient ermöglicht ist. Insbesondere ist die Positionsbestimmung auch dann ermöglicht, wenn beispielsweise kein GPS-Empfang vorhanden ist.

Dadurch, dass die digitale Karte basierend auf dem erfassten Umfeld erstellt wird, wird insbesondere der technische Vorteil bewirkt, dass die digitale Karte effizient erstellt werden kann, ohne dass zusätzliche externe Vermessungsmittel oder Landmarken im Umfeld der Maschinen zwingend erforderlich sind.

Insbesondere wird beispielsweise der technische Vorteil bewirkt, dass keine externen Vermessungen zwecks Erstellung der digitalen Karte durchgeführt werden müssen. "Extern" ist hier insbesondere relativ zum Luftfahrzeug zu sehen.

Nach einer Ausführungsform ist vorgesehen, dass das unbemannte Luftfahrzeug und/oder die Steuerungseinrichtung ausgebildet sind, die digitale Karte des Umfelds unter Verwendung eines SLAM-Verfahrens zu erstellen.

Dadurch wird insbesondere der technische Vorteil bewirkt, dass die digitale Karte effizient erstellt werden kann.

Die Abkürzung "SLAM" steht für "Simultaneous Localization and Mapping", was ins Deutsche mit "simultane Lokalisierung und Kartenerstellung" übersetzt werden kann.

SLAM-Verfahren sind als solche bereits in der Robotik bekannt. Basierend auf solchen Verfahren erstellt beispielsweise ein mobiler Roboter gleichzeitig eine Karte seiner Umgebung und schätzt innerhalb dieser Karte seine Position.

SLAM-Verfahren umfassen zum Beispiel ein oder mehrere der folgenden Verfahren: EKF-SLAM (Extended Kalman Filter), beispielsweise SEIF (Space Extended Information Filter), UKF (Unscented Kalman Filter), SLAM mit Partikelfilter, beispielsweise Fast SLAM, Grid-basierte Verfahren mit Rao-Blackwellisierten Partikelfiltern, DP-SLAM, "Expectation-Maximization-Filter", Graph-basierende Techniken, beispielsweise Graph-SLAM, TORO, HOG-Man Tree Map, Relaxationstechniken, Smoothing-Techniken.

SLAM-Verfahren basieren also insbesondere darauf, dass die digitale Karte inkrementell erstellt oder aufgebaut wird.

Das heißt also, dass gemäß einer Ausführungsform die digitale Karte inkrementell aufgebaut wird.

Das heißt also insbesondere, dass beispielsweise zunächst keine digitale Karte vorhanden ist. Die digitale Karte wird also beispielsweise neu erstellt.

Beispielsweise ist vorgesehen, dass eine momentane Position des Luftfahrzeugs den Ursprung eines Koordinatensystems in der digitalen Karte definiert. Somit ist also beispielsweise vorgesehen, dass eine erste Umfelderfassung von der momentanen Position durchgeführt wird, so dass beispielsweise das erfasste Umfeld mit der momentanen Position in die digitale Karte integriert wird.

Nach dieser ersten Umfelderfassung ist beispielsweise vorgesehen, dass eine zweite Umfelderfassung von einer sich aufgrund des Weiterfliegens resultierenden neuen Position des Luftfahrzeugs durchgeführt wird.

Die erste und die zweite Umfelderfassung werden sich teilweise überlappen, so dass ein Teil der aus der ersten Umfelderfassung bekannten Umgebung von der neuen Position wiedererkannt wird. Hierbei wird auch ein neuer, bisher unbekannter Bereich des Umfelds von der neuen Position erfasst.

Aus der Überlappung wird beispielsweise eine Bewegung des Luftfahrzeugs berechnet, so dass eine absolute Position (neue Position) relativ zu dem Ursprung des Koordinatensystems bekannt ist, so dass das zweite erfasste Umfeld mit der neuen Position in die digitale Karte integriert werden kann respektive wird. Basierend auf dieser Vorgehensweise wird somit die digitale Karte inkrementell erweitert oder aufgebaut, bis beispielsweise ein bestimmtes Gebiet, innerhalb welchem die Maschine respektive Anlage angeordnet ist, vermessen ist.

Nach einer Ausführungsform ist vorgesehen, dass die Steuerungseinrichtung ausgebildet ist, ein Energiemanagement des unbemannten Luftfahrzeugs zu steuern.

Dadurch wird zum Beispiel der technische Vorteil bewirkt, dass ein Energieverbrauch des unbemannten Luftfahrzeugs effizient gesteuert werden kann. Dies deshalb, da die Steuerungseinrichtung in der Regel einen genauen Überblick über den Gesamtbetrieb des Automatisierungssystems aufweist, so dass dem genauen Überblick entsprechende zusätzliche Informationen zur Steuerung des Energiemanagements des unbemannten Luftfahrzeugs genutzt werden können.

Nach einer Ausführungsform ist vorgesehen, dass das unbemannte Luftfahrzeug eine erste Energieversorgung ausschließlich für einen Flugbetrieb und eine zweite Energieversorgung für einen Aktor und/oder einen Sensor aufweist, wobei die Steuerungseinrichtung ausgebildet ist, bei einem Unterschreiten einer Speicherkapazität der ersten Energieversorgung unter einem vorgegebenen Speicherkapazitätsschwellwert für ein Aufrechterhalten des Flugbetriebs von der ersten Energieversorgung auf die zweite Energieversorgung umzuschalten.

Dadurch wird zum Beispiel der technische Vorteil bewirkt, dass ein Flugbetrieb effizient aufrechterhalten werden kann.

Das heißt also insbesondere, dass das unbemannte Luftfahrzeug eine erste Energieversorgung aufweist, die ausschließlich für den Flugbetrieb verwendet wird. Die zweite Energieversorgung wird für eine Energieversorgung für einen Aktor respektive einen Sensor verwendet. Die zweite Energieversorgung wird also erst dann für den Flugbetrieb verwendet, wenn eine Speicherkapazität der ersten Energieversorgung einen vorgegebenen Schwellwert unterschreitet.

Die erste respektive zweite Energieversorgung umfassen nach einer Ausführungsform einen oder mehrere Akkumulatoren respektive eine oder mehrere Batterien.

Gemäß einer Ausführungsform ist vorgesehen, dass die Steuerungseinrichtung ausgebildet ist, einen Ist-Zustand, beispielsweise Energieverbrauch, Restflugzeit, des unbemannten Luftfahrzeugs zu überwachen und basierend auf dem Ist-Zustand das unbemannte Luftfahrzeug zu steuern.

Gemäß dieser Ausführungsform ist also vorgesehen, dass die Steuerungseinrichtung ein so genanntes "Condition-Monitoring" durchführt. Die Formulierung "Condition-Monitoring" kann im Deutschen als "Zustandsüberwachung" bezeichnet werden. Das Konzept des "Condition-Monitoring" basiert also insbesondere auf einer regelmäßigen respektive permanenten Erfassung eines Maschinenzustands respektive Betriebszustands des unbemannten Luftfahrzeugs durch beispielsweise Messung und Analyse einer oder mehrerer physikalischer Größen. Beispielsweise überwacht die Steuerungseinrichtung eine Betriebstemperatur des unbemannten Luftfahrzeugs. Eine Betriebstemperatur umfasst oder ist beispielsweise eine Temperatur des Antriebsmotors respektive der ersten respektive zweiten Energieversorgung.

Ein Ist-Zustand umfasst also insbesondere die vorstehend bezeichnete Temperatur respektive die vorstehend bezeichneten Temperaturen. Ein Ist-Zustand umfasst beispielsweise einen Energieverbrauch des unbemannten Luftfahrzeugs. Ein Ist-Zustand umfasst beispielsweise eine Restflugzeit des unbemannten Luftfahrzeugs.

Durch das Vorsehen einer Zustandsüberwachung wird also insbesondere der technische Vorteil bewirkt, dass das Luftfahrzeug effizient gesteuert werden kann.

So kann also insbesondere bei einer Aufgabenplanung mittels der Steuerungseinrichtung für das unbemannte Luftfahrzeug eine Restflugzeit respektive ein Energieverbrauch des Luftfahrzeugs berücksichtigt werden. So kann beispielsweise vermieden werden, dass das unbemannte Luftfahrzeug eine ihm zugeteilte Aufgabe aufgrund eines zu hohen Energieverbrauchs oder einer zu geringen Restflugzeit gar nicht mehr ausführen kann. Somit können also insbesondere unnötige Verzögerungen vermieden werden, die beispielsweise entstehen könnten, wenn das Luftfahrzeug, wie vorstehend ausgeführt, seine Aufgabe aus den vorstehend bezeichneten Gründen nicht durchführen kann.

Ein Ist-Zustand des Luftfahrzeugs umfasst insbesondere einen Status des Luftfahrzeugs. Ein Status bezeichnet hier insbesondere, ob das Luftfahrzeug beschädigt oder unbeschädigt ist.

Das heißt also insbesondere, dass die Steuerungseinrichtung überwacht, ob das Luftfahrzeug beschädigt oder unbeschädigt ist.

Gemäß einer Ausführungsform ist vorgesehen, dass mehrere unbemannte Luftfahrzeuge vorgesehen sind, wobei die Steuerungseinrichtung ausgebildet ist, die mehreren unbemannten Luftfahrzeuge derart zu steuern, dass eines der mehreren unbemannten Luftfahrzeuge an einer Ladestation mit elektrischer Energie für einen Flugbetrieb und/oder für einen Sensor und/oder einen Aktor versorgt wird, während die restlichen der mehreren unbemannten Luftfahrzeuge in einem Flugbetrieb betrieben werden.

Dadurch wird insbesondere der technische Vorteil bewirkt, dass ein effizienter Betrieb der mehreren Luftfahrzeuge bewirkt werden kann. Insbesondere wird dadurch der technische Vorteil bewirkt, dass im Fall eines Ausfalls einer der restlichen Luftfahrzeuge dieses ausgefallene Luftfahrzeug durch das Luftfahrzeug ersetzt werden kann, welches momentan an der Ladestation mit elektrischer Energie versorgt wird. Somit wird also insbesondere der technische Vorteil einer Redundanz bewirkt. Nach einer Ausführungsform umfasst das Automatisierungssystem eine oder mehrere Ladestationen, die ausgebildet sind, eine oder mehrere Luftfahrzeuge mit elektrischer Energie zu versorgen.

Nach einer Ausführungsform ist vorgesehen, dass die Steuerungseinrichtung ausgebildet ist, die eine oder die mehreren Ladestationen zu steuern, um die angedockten Luftfahrzeuge mit elektrischer Energie zu versorgen.

Nach einer nicht beanspruchten Ausführungsform ist vorgesehen, dass die Maschine eine Schneidmaschine, insbesondere Laserschneidmaschine, oder ein 3D-Drucker ist, wobei das unbemannte Luftfahrzeug als Bearbeitungskopf der Schneidmaschine oder als Arbeitskopf des 3D-Druckers ausgebildet ist.

Diese Ausführungsform basiert also auf dem Gedanken, dass das unbemannte Luftfahrzeug ein funktionaler Teil der Schneidmaschine respektive des 3D-Druckers ist.

Das heißt also insbesondere, dass das Luftfahrzeug als Bearbeitungskopf der Schneidmaschine, insbesondere der Laserschneidmaschine, ausgebildet ist. Das heißt also insbesondere, dass das unbemannte Luftfahrzeug als Arbeitskopf des 3D-Druckers ausgebildet ist.

Dadurch wird also in vorteilhafter Weise eine flexible und effiziente Nutzung der Schneidmaschine respektive des 3D-Druckers ermöglicht. Das zu bearbeitende Werkstück muss beispielsweise nicht mehr zur Schneidmaschine oder zum 3D-Drucker transportiert werden, sondern das Werkstück kann vor Ort bearbeitet werden, indem das Luftfahrzeug zum Werkstück fliegt.

Das unbemannte Luftfahrzeug ist also beispielsweise ein Bearbeitungskopf der Schneidmaschine.

Das unbemannte Luftfahrzeug ist also beispielsweise ein Arbeitskopf des 3D-Druckers.

Nach einer Ausführungsform ist vorgesehen, dass das unbemannte Luftfahrzeug einen oder mehrere Sensoren umfasst.

Ausführungen, die im Zusammenhang mit einem Sensor gemacht sind, gelten insbesondere analog für mehrere Sensoren und umgekehrt.

Bei mehreren Sensoren sind diese beispielsweise gleich oder beispielsweise unterschiedlich ausgebildet.

Der Sensor ist beispielsweise ausgebildet, ein Umfeld des unbemannten Luftfahrzeugs zu erfassen und dieser Erfassung entsprechende Umfeldsensordaten zu ermitteln.

Der Sensor ist beispielsweise ausgebildet, ein Umfeld der Maschine respektive die Maschine zu erfassen und der Erfassung entsprechende Umfeldsensordaten zu ermitteln.

Ein Sensor im Sinne der Beschreibung ist beispielsweise einer der folgenden Sensoren: Radarsensor, Ultraschallsensor, Lidarsensor, Lasersensor, Magnetsensor, Temperatursensor, Drucksensor, Mikrophon, Hall-Sensor, Gassensor, Partikelsensor, Abstandssensor, Infrarotsensor, Videosensor, insbesondere Videosensor einer Videokamera, beispielsweise einer 3D-Videokamera.

Das heißt also insbesondere, dass das unbemannte Luftfahrzeug eine oder mehrere Sensoren aufweist, die beispielsweise ein Umfeld des unbemannten Luftfahrzeugs erfassen. Insbesondere erfassen diese Sensoren die Maschine respektive ein Umfeld der Maschine.

Nach einer Ausführungsform umfasst das unbemannte Luftfahrzeug eine oder mehrere Videokameras, beispielsweise 3D-Videokameras, für eine Umfelderfassung.

Das unbemannte Luftfahrzeug umfasst eine Kommunikationsschnittstelle, die ausgebildet ist, mit der Steuerungseinrichtung über ein Kommunikationsnetzwerk zu kommunizieren.

Die Kommunikationsschnittstelle ist beispielsweise als eine drahtlose und/oder als eine drahtgebundene Kommunikationsschnittstelle ausgebildet.

Das heißt also insbesondere, dass eine Kommunikation zwischen dem unbemannten Luftfahrzeug und der Steuerungseinrichtung drahtlos respektive drahtgebunden durchgeführt werden kann. Ein Kommunikationsnetzwerk im Sinne der Beschreibung umfasst beispielsweise eines oder mehrere der folgenden Kommunikationsnetzwerke: WLAN, Mobilfunk, WISA ("Wireless System for Industrial Automation: Process Control and Related Applications"; ISA100.11a), DECT, ZigBee, Ultrabreitband (UWB), WirelessHART, Bluetooth, insbesondere Bluetooth-LE.

Ein Kommunikationsnetzwerk umfasst ein Bussystem, beispielsweise ein EtherCAT-Bussystem.

Beispielsweise wird die Kommunikation zwischen der Steuerungseinrichtung und dem unbemannten Luftfahrzeug über eine optische Kommunikationsverbindung, beispielsweise unter Verwendung eines Lasers, durchgeführt. Dies ist insbesondere besonders vorteilhaft für eine Datenübertragungsgeschwindigkeit und eine besonders hohe elektromagnetische Verträglichkeit (EMV).

In einer Ausführungsform ist das Luftfahrzeug mit der Steuerungseinrichtung mittels eines Kabels verbunden. Das Kabel umfasst beispielsweise ein Stromkabel respektive ist ein Stromkabel. Das Kabel umfasst beispielsweise ein Kommunikationskabel respektive ist ein Kommunikationskabel. So kann in vorteilhafter Weise das Luftfahrzeug effizient mittels des Kabels mit Strom versorgt werden respektive es kann mit dem Luftfahrzeug effizient kabelgebunden kommuniziert werden.

Nach einer Ausführungsform umfasst das unbemannte Luftfahrzeug einen oder mehrere Aktoren.

Ausführungen, die im Zusammenhang mit einem Aktor gemacht sind, gelten analog für mehrere Aktoren und umgekehrt.

Bei mehreren Aktoren sind diese beispielsweise gleich oder beispielsweise unterschiedlich ausgebildet.

Ein Aktor ist beispielsweise ein hydraulischer oder ein pneumatischer Aktor. Ein Aktor ist beispielsweise ein Bimetall-Aktor. Ein Aktor ist beispielsweise ein Elektromotor. Ein Aktor ist beispielsweise ein Piezoaktor oder ein magnetostriktiver Aktor.

Ein Aktor umfasst beispielsweise einen Greifarm respektive ist ein Greifarm.

Nach einer Ausführungsform ist vorgesehen, dass das unbemannte Luftfahrzeug eine Abschirmeinrichtung aufweist, um beispielsweise in vorteilhafter Weise Windbelastungen für beispielsweise das zu transportierende oder zu bearbeitende Werkstück zu minimieren.

Eine Abschirmeinrichtung umfasst beispielsweise eine oder mehrere Blenden.

Steuerungsdaten im Sinne der Beschreibung umfassen beispielsweise eine oder mehrere der folgenden Daten: Soll-Trajektoriendaten einer vom Luftfahrzeug abzufliegenden Soll-Trajektorie, Positionsdaten einer von dem Luftfahrzeug anzufliegenden Position respektive eines vom dem Luftfahrzeug anzufliegenden Ort.

Nach einer nicht beanspruchten Ausführungsform ist die Maschine Teil einer Fertigungsstraße für Kraftfahrzeuge. Die Fertigungsstraße für Kraftfahrzeuge umfasst mehrere Arbeitsstationen, an denen ein zu fertigendes Kraftfahrzeug sukzessive montiert oder gefertigt wird. Eine dieser Arbeitsstationen ist beispielsweise eine Lackieranlage, in welcher das Kraftfahrzeug lackiert wird. Nach dieser Arbeitsstation, also nach der Lackieranlage, ist nach einer Ausführungsform vorgesehen, dass das unbemannte Luftfahrzeug mittels eines Sensors, beispielsweise eines Videosensors, als auszuführende Aufgabe überprüft, ob das Kraftfahrzeug vollständig lackiert wurde.

Sofern das Kraftfahrzeug nicht vollständig lackiert wurde, ist nach einer Ausführungsform vorgesehen, dass das unbemannte Luftfahrzeug als auszuführende Aufgabe selbständig das Kraftfahrzeug an den entsprechenden Stellen nachlackiert. Hierfür ist beispielsweise vorgesehen, dass das Luftfahrzeug eine Lackiereinrichtung aufweist.

Nach einer nicht beanspruchten Ausführungsform umfasst das Automatisierungssystem eine Abfüllanlage zum Abfüllen von Getränkeflaschen. Gemäß dieser Ausführungsform ist beispielsweise vorgesehen, dass nach einem Bestücken von abgefüllten Getränkeflaschen in einen Getränkekasten das unbemannte Luftfahrzeug mittels eines Sensors, beispielsweise mittels eines Videosensors, als auszuführende Aufgabe überprüft, ob der Getränkekasten vollständig befüllt wurde.

Sofern der Getränkekasten nicht vollständig befüllt wurde, ist gemäß einer Ausführungsform vorgesehen, dass das Luftfahrzeug den nicht vollständig befüllten Getränkekasten als auszuführende Aufgabe vollständig bestückt. Hierfür ist beispielsweise vorgesehen, dass das unbemannte Luftfahrzeug zu einem Lagerort fliegt und dort eine oder mehrere Getränkeflaschen aufnimmt und diese dann zu dem nicht vollständig befüllten Getränkekasten transportiert.

Hier kann beispielsweise vorgesehen sein, dass der nicht vollständig befüllte Getränkekasten weiter mittels eines Förderbands transportiert wird, während das Luftfahrzeug den Getränkekasten vollständig bestückt. Somit kann also in vorteilhafter Weise die Abfüllanlage weiter betrieben werden. Insbesondere können dadurch in vorteilhafter Weise Ausfallzeiten vermieden werden.

Die Formulierung "respektive" umfasst insbesondere die Formulierung "und/oder".

Die Erfindung wird im Folgenden anhand von bevorzugten Ausführungsbeispielen näher erläutert. Hierbei zeigen
- Fig. 1: ein nicht beanspruchten Automatisierungssystem mit einem unbemannten Luftfahrzeug,
- Fig. 2: das Automatisierungssystem gemäß Fig. 1 mit mehreren unbemannten Luftfahrzeugen,
- Fig. 3: ein Ablaufdiagramm eines nicht beanspruchten Verfahrens zum Betreiben eines Automatisierungssystems.

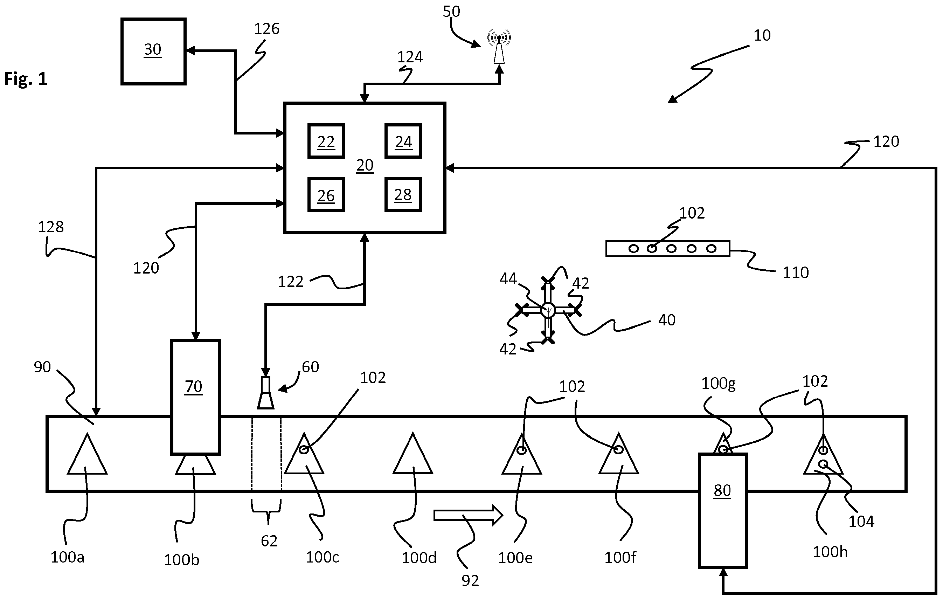

Fig. 1 zeigt ein Automatisierungssystem 10.

Das Automatisierungssystem 10 umfasst eine Steuerungseinrichtung 20. Innerhalb der Steuerungseinrichtung 20 sind beispielweise eine Mehrzahl von Cores ("Rechenkernen") 22, 24, 26, 28 angeordnet, die unterschiedliche Steuerungsaufgaben übernehmen, beispielsweise eine Kommunikation mit einer übergeordneten Einheit 30, eine Steuerung von Bearbeitungsstationen 70, 80, eine Steuerung einer Kamera 60, eine Steuerung eines Förderbandes 90, eine Steuerung einer Drohne 40.

Über eine bidirektionale Datenleitung 126 ist die Steuerungseinrichtung 20 mit einer übergeordneten Einheit 30 verbunden, die beispielweise eine Fabriksteuerung und/oder eine Leitwarte und/oder ein Bedienterminal sein kann, mittels welcher automatisiert und/oder seitens eines Bedieners das Automatisierungssystem 10 überwacht und/oder Befehle für die Steuerungseinrichtung 20 generiert werden können.

Weiterhin umfasst das Automatisierungssystem 10 ein Förderband 90, auf dem Produkte 100a bis 100h in eine Förderrichtung 92 transportiert werden. Ein Auflegen respektive ein Abnehmen der Produkte 100a bis 100h zu Beginn respektive am Ende des Förderbandes 90 sind hier der Übersicht halber nicht dargestellt.

Während des Transports der Produkte 100a bis 100h durchlaufen diese zwei Bearbeitungsstationen 70 und 80. In der ersten Bearbeitungsstation 70 werden beispielsweise Elemente 102 auf die Produkte 100a bis 100h aufgeklebt. In der zweiten Bearbeitungsstation 80 werden dann beispielweise zweite Elemente 104 auf die Produkte 100a bis 100h aufgeklebt.

Um den Klebeprozess in den beiden Bearbeitungsstationen 70 und 80 und den Produkttransport mittels des Förderbandes 90 entsprechend zu steuern, ist die Steuerungseinrichtung 20 über bidirektionale Datenleitungen 120 und 128 mit den Bearbeitungsstationen 70 und 80 und dem Förderband 90 verbunden.

Hinter der ersten Bearbeitungsstation 70 ist zur Qualitätskontrolle eine Kamera 60 angeordnet, die in einem Überwachungsbereich 62 des Förderbandes 90 Bilder der Produkte 100a bis 100h erfasst und entsprechende Sensordaten ebenfalls mittels einer bidirektionalen Datenleitung 122 an die Steuerungseinrichtung 20 übermittelt.

Das Förderband 90 und die Bearbeitungsstationen 70, 80 bilden hier insbesondere eine Anlage. Das Förderband 90 ist ein Beispiel einer Maschine. Die Bearbeitungsstationen 70, 80 bilden jeweils ein Beispiel einer weiteren Maschine. Das Automatisierungssystem 10 umfasst also mehrere Maschinen: Das Förderband 90 und die Bearbeitungsstationen 70, 80, wobei das Förderband 90 und die Bearbeitungsstationen 70, 80 mittels der Steuerungseinrichtung 20 gesteuert werden.

Wie in Fig. 1 dargestellt, befindet sich das Produkt 100a noch vor der ersten Bearbeitungsstation 70, während bei dem Produkt 100b gerade der Klebeprozess des ersten Elementes 102 vorgenommen wird. Mittels der Kamera 60 wurde erfasst und der Steuerungseinrichtung 20 mittels der Datenleitung 122 übermittelt, dass bei den Produkten 100c, 100e, 100f, 100g und 100h der Klebeprozess in der ersten Bearbeitungsstation 70 erfolgreich vollzogen wurde, so dass diese Produkte mit einem Element 102 versehen sind. Die Kamera 60 hat ebenfalls erfasst und an die Steuerungseinrichtung 20 übermittelt, dass der Klebeprozess bei dem Produkt 100d nicht erfolgreich war und dieses Produkt nicht über ein aufgeklebtes Element 102 verfügt.

Um das Produkt 100d dennoch im weiteren Produktionsprozess belassen und auch weiterhin verwenden zu können, steuert die Steuerungseinrichtung 20 nun eine dem Automatisierungssystem 10 zugeordnete Drohne 40 (unbemanntes Luftfahrzeug). Hierzu berechnet die Steuerungseinrichtung 20, beispielsweise in Echtzeit, eine erforderliche Flugbahn der Drohne 40, sowie erforderliche Arbeitsschritte der an der Drohne 40 angeordneten, hier aus Gründen der Übersicht nicht dargestellten Aktoren.

Die Flugbahn und die erforderlichen Arbeitsschritte bilden Steuerungsdaten.

Die Steuerungsdaten für die Drohne 40 werden von der Steuerungseinrichtung 20 mittels einer weiteren bidirektionalen Datenleitung 124 an einen Sender 50 übertragen, der diese dann mittels einer drahtlosen Kommunikationstechnologie, zum Beispiel WLAN, an die Drohne 40 sendet.

Zum Empfang der Steuerungsdaten umfasst die Drohne 40 eine Antenne 44. Weiterhin umfasst die Drohne 40 vier einzelne Rotoranordnungen 42, so dass die Drohne 40 als ein Quadrocopter ausgebildet ist.

Die Steuerungsdaten umfassen also Anweisungen, also eine von der Drohne 40 auszuführende Aufgabe, dass die Drohne 40 von einer Lagereinrichtung 110 jeweils ein dort bevorratetes Element 102 abholt, zu dem Produkt 100d fliegt und dort das fehlende Element 102 aufklebt. Dabei fliegt die Drohne 40 in synchroner Geschwindigkeit mit der Fördergeschwindigkeit des Förderbands 90, so dass der kontinuierliche Förderprozess in vorteilhafter Weise nicht unterbrochen werden muss.

Zum Aufnehmen, Halten, Kleben und Abgeben des Elements 102 umfasst die Drohne 40 entsprechend ausgebildete, hier der Übersicht halber nicht dargestellte Aktoren und Energieversorgungen.

Über die drahtlose Kommunikationsverbindung zwischen dem Sender 50 und der Antenne 44 werden nach einer nicht beanspruchten Ausführungsform

Daten der Drohne 40 zurück an die Steuerungseinrichtung 20 übermittelt. Solche Daten umfassen beispielsweise Positionsdaten und/oder Sensordaten, beispielsweise Umfeldsensordaten, von einem oder mehreren Sensoren, und/oder Zustandsdaten zu einem Energieverbrauch und/oder einer Restflugzeit der Drohne 40.

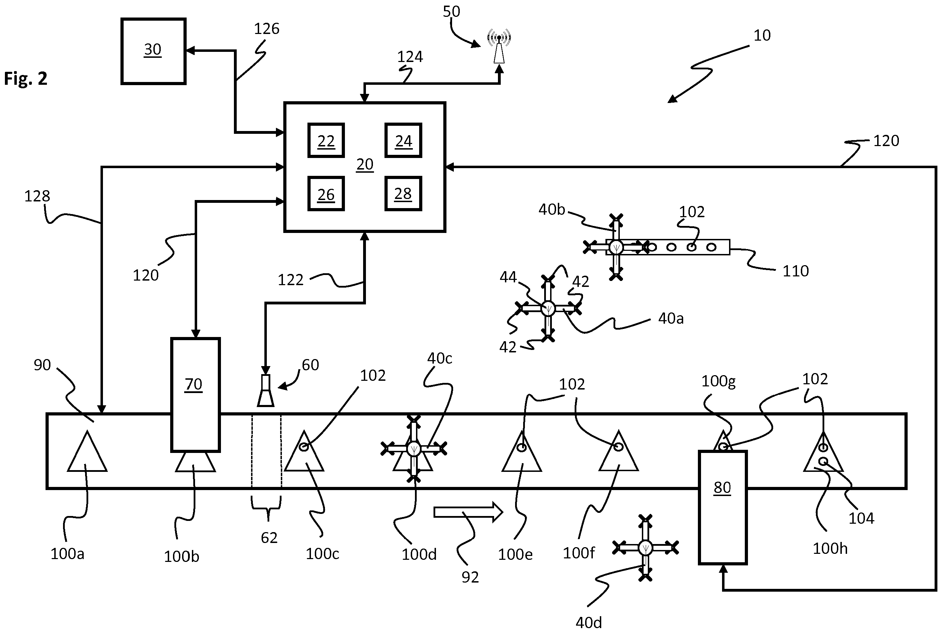

Fig. 2 zeigt das Automatisierungssystem 10 gemäß Fig. 1, wobei eine Mehrzahl an Drohnen 40a bis 40d zum Ausführen von Aufgaben vorgesehen sind. Die Mehrzahl an Drohnen 40a bis 40d werden also eingesetzt und mittels der Steuerungseinrichtung 20 gesteuert.

Dies kann beispielsweise vorteilhaft sein, um beispielsweise die Fördergeschwindigkeit des Förderbandes 90 zu erhöhen, ohne auf die Möglichkeit des nachträglichen Klebens von Elementen 102 seitens einer Drohne 40 zu verzichten.

Während beispielsweise die Drohne 40a nach erfolgter Klebung in einer Warteposition verharrt, nimmt die Drohne 40b beispielsweise gerade ein neues Element 102 auf. Zeitgleich klebt beispielsweise die Drohne 40c ihr aufgenommenes Element 102 auf das Produkt 100d.

Somit können also in vorteilhafter Weise beispielsweise mehrere Produkte parallel nachbearbeitet werden.

Zusätzlich umfasst das Automatisierungssystem 10 eine weitere Drohne 40d, welche zusätzliche Sensoren aufweist, um die einzelnen Komponenten des Automatisierungssystems 10 zu überwachen. So kann die Drohne 40d beispielsweise eine Temperatur im Bereich der zweiten Bearbeitungsstation 80 erfassen und mittels der drahtlosen Kommunikationsverbindung über den Sender 50 und die Datenleitung 124 an die Steuerungseinrichtung 20 übermitteln.

Die Steuerungseinrichtung 20 kann dann beispielsweise überprüfen, ob sich die Temperatur in einem vorgegebenen, zulässigen Temperaturbereich befindet oder nicht. Sollte die Temperatur den zulässigen Temperaturbereich verlassen haben, so deutet dies auf einen Fehler hin, und die Steuerungseinrichtung 20 kann beispielsweise entsprechende Gegenmaßnahmen einleiten.

Das Konzept des Einsatzes von Drohnen in einem Automatisierungssystem ermöglicht es in vorteilhafter Weise, dass beispielsweise nicht mehr alle kritischen Komponenten in dem Automatisierungssystem 10 mit einem Temperatursensor ausgerüstet sein müssen, was insbesondere Bauteile und einen Verkabelungsaufwand einspart.

Beispielsweise weisen alle vier Drohnen 40a bis 40d einen identischen Aufbau auf, so dass die Steuerungseinrichtung 20 stets situationsbedingt die einzelnen Drohnen 40a bis 40d für die verschiedenen Aufgaben wie Aufnehmen eines Elementes 102, Transport eines Elementes 102, Kleben eines Elementes 102 und/oder Überwachen des Automatisierungssystems 10 einteilen und ihnen entsprechende Steuerungsdaten übermitteln kann. Beispielsweise ist es somit in vorteilhafter Weise ermöglicht, dass stets eine der Drohnen 40a bis 40d beispielsweise in einer nicht dargestellten Ladestation wieder mit Energie für den Flugbetrieb und/oder die Aktoren versorgt wird, während die restlichen Drohnen weiter im Flugbetrieb betrieben werden. Insbesondere beim Einsatz mehrerer Drohnen 40a bis 40d in dem Automatisierungssystem 10 ist es beispielsweise vorgesehen, dass die Steuerungseinrichtung 20 neben der eigentlichen Flugbahnplanung der einzelnen Drohnen 40a bis 40d zusätzlich deren momentane Position bestimmt und die einzelnen Flugbahnen aufeinander abstimmt, also anpasst, um Kollisionen zu vermeiden.

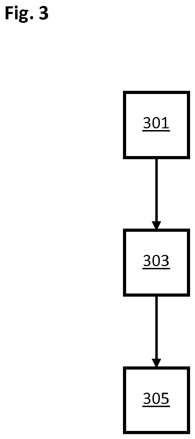

Fig. 3 zeigt ein Ablaufdiagramm eines nicht beanspruchten Verfahrens zum Betreiben eines Automatisierungssystems gemäß einer Ausführungsform.

Bei dem Automatisierungssystem handelt es sich beispielsweise um das in den Fig. 1 und 2 gezeigte Automatisierungssystem 10. Es ist gemäß einem Schritt 301 vorgesehen, dass die Steuerungseinrichtung Steuerungsdaten (die allgemein auch als Flugbefehle bezeichnet werden können) zur Steuerung des unbemannten Luftfahrzeugs für das unbemannte Luftfahrzeug ermittelt, wobei die Steuerungsdaten eine mittels des unbemannten Luftfahrzeugs auszuführende Aufgabe zur Unterstützung des Betriebs der Maschine angeben.

Die Steuerungsdaten geben beispielsweise eine Zielposition an, zu der das Luftfahrzeug hinfliegen soll. Die Steuerungsdaten geben beispielsweise an, entlang welcher Route das Luftfahrzeug zur Zielposition fliegen soll.

Gemäß einem Schritt 303 werden die Steuerungsdaten an das unbemannte Luftfahrzeug per Funk gesendet.

Das Luftfahrzeug umfasst eine eigene Flugsteuerung, die basierend auf den empfangenen Steuerungsdaten das Luftfahrzeug entsprechend gemäß einem Schritt 305 steuert.

Beispielsweise ist die Zielposition ein Förderband, über welchem das Luftfahrzeug fliegen soll, um mittels einer Kamera des Luftfahrzeugs Bilder von den mittels des Förderbands geförderten Gegenständen aufzunehmen. Das Luftfahrzeug sendet die aufgenommenen Bilder beispielweise per Funk an die Steuerungseinrichtung, die beispielsweise die Bilder auswertet und beispielsweise basierend auf der Auswertung das Förderband steuert.

Wenn die Steuerungseinrichtung beispielsweise basierend auf der Auswertung der Bilder ermittelt, dass einer der zu fördernden Gegenstände beispielsweise einen Defekt aufweist, so ist beispielsweise vorgesehen, dass die Steuerungseinrichtung das Förderband anhält.

Die Steuerungseinrichtung informiert beispielsweise ein menschliches Servicepersonal über den Defekt, so dass das menschliche Servicepersonal händisch den defekten Gegenstand austauschen respektive entfernen kann.

Die Steuerungseinrichtung weist beispielsweise das Luftfahrzeug unter Verwendung von entsprechenden Steuerungsdaten an, den defekten Gegenstand auszutauschen respektive zu entfernen.

Zum Manipulieren, also insbesondere zum Greifen, des defekten Gegenstands umfasst das Luftfahrzeug einen Greifarm. Mittels des Greifarms greift das Luftfahrzeug den defekten Gegenstand und transportiert ihn per Luftweg zu einem bestimmten Ort. Insbesondere transportiert das Luftfahrzeug analog unter Verwendung seines Greifarms einen nicht-defekten, also funktionsfähigen, Gegenstand zum Förderband und legt ihn auf das Förderband ab.

Basierend auf den Steuerungsdaten ist beispielsweise vorgesehen, dass das unbemannte Luftfahrzeug die auszuführende Aufgabe ausführt.

Basierend auf den Steuerungsdaten ist beispielsweise vorgesehen, dass die Steuerungseinrichtung das Luftfahrzeug fernsteuert, damit dieses die auszuführende Aufgabe ausführt.

Unbemannte Luftfahrzeuge werden zur Erfüllung von Aufgaben in der Automatisierung von Maschinen, Anlagen, Gebäuden genutzt oder verwendet.

Ein wesentlicher erfindungsgemäßer Gedanke ist weiter, dass die Steuerung des Luftfahrzeugs durch die gleiche Steuerung vorgenommen wird, die auch die Maschinen des Automatisierungssystems steuert. Das heißt beispielsweise, dass Steuerbefehle oder Steuerkommandos für das unbemannte Luftfahrzeug von der Steuerungseinrichtung ermittelt werden.

Die Steuerungseinrichtung kann auch als eine Automatisierungssteuerung bezeichnet werden. Gemäß der Erfindung steuert die Steuerungseinrichtung eine CNC-Maschine (CNC steht für "Computerized Numerical Control" und kann mit "rechnergestützte numerische Steuerung" übersetzt werden.). Die Steuerungseinrichtung ist eine CNC-Steuerungseinrichtung.

Die CNC-Steuerungseinrichtung dazu verwendet werden, eine Ein- oder Mehrzahl an Drohnen auf engstem Raum effektiv und sicher zu steuern.

In einer Ausführungsform ist die Steuerungseinrichtung eine speicherprogrammierbare Steuerungseinrichtung (SPS; auf Englisch "PLC": "Programmable Logic Controller").

In einer Ausführungsform umfasst das unbemannte Luftfahrzeug einen oder mehrere Rotoren.

In einer Ausführungsform ist das unbemannte Luftfahrzeug ein Quad- oder Hexa- oder Octocopter, allgemein ein Multicopter.

Beispielsweise wird die Drohne mittels der Steuerungseinrichtung energieoptimiert angesteuert. Ein energieoptimiertes Ansteuern bedeutet insbesondere ein Vermeiden von schnellen Beschleunigungen und/oder abrupten Richtungswechseln.

Die Steuerungseinrichtung führt insbesondere eine optimierte Bahnplanung für die Drohne durch. Optimiert bedeutet hier insbesondere ein Optimieren hinsichtlich einer Energieeffizienz, eines schnellsten Weges und/oder einer Kollisionsvermeidung.

Eine Flugbahn der Drohne wird über an sich bekannte G-Code (DIN66025)-Befehle programmiert.

Beispielsweise sind ein Anlernen (auf Englisch: "Teachen") und ein Abspeichern von Bewegungen der Drohne vorgesehen, die anschließend automatisiert abgeflogen werden.

Vorzugsweise werden eine Bewegung und/oder eine Ausrichtung des Luftfahrzeugs in ein oder mehreren Dimensionen des Raumes mit Bewegungsabläufen der Maschine mittels der Automatisierungssteuerung korreliert.

Insbesondere ist vorgesehen, dass eine Weggenerierung für das Luftfahrzeug mittels der Automatisierungssteuerung durchgeführt wird.

Es ist vorgesehen, dass das unbemannte Luftfahrzeug als eine Bewegungsachse mit einem zugehörigen Programm in der Automatisierungssteuerung integriert ist.

Insbesondere ist eine Zusammenarbeit von dem unbemannten Luftfahrzeug und einem Standard-Bewegungsobjekt bzw. einer Bewegungsachse vorgesehen, zum Beispiel über eine Kopplung. Das heißt insbesondere, dass das Standard-Bewegungsobjekt bzw. die Bewegungsachse mit dem Luftfahrzeug gekoppelt respektive verknüpft wird.

Insbesondere ist eine Kollaboration des Luftfahrzeugs mit einem Standard-Bewegungsobjekt bzw. einer Bewegungsachse vorgesehen.

Insbesondere ist vorgesehen, dass bei mehreren Drohnen, die gleichzeitig verwendet werden, die Steuerungseinrichtung für die konkrete Aufgabe die am geeignetste respektive nächstliegende Drohne selbsttätig auswählt.

Insbesondere ist vorgesehen, dass die Luftfahrzeuge zu einander korrelierte Bewegungsabläufe ausführen.

In einer Ausführungsform ist vorgesehen, dass die Drohne kabelgebunden und/oder kabellos angesteuert wird. Eine kabellose Ansteuerung umfasst beispielsweise eine Ansteuerung mittels einer drahtlosen Kommunikationsverbindung.

Eine drahtlose Kommunikationsverbindung wird beispielsweise unter Verwendung von einer oder mehreren folgenden drahtlosen Kommunikationstechnologien bewirkt:
Bluetooth [LE], mit dem Vorteil einer vorteilhaften Koexistenz von mehreren Drohnen und eines niedrigen Energieverbrauchs;
WISA [Industriestandard: https://en.wikipedia.org/wiki/ISA100.11a ]; WirelessHART [Industriestandard];
Ultrabreitband (UWB); DECT; FUNK; ZigBee; Optische Nachrichtenübertragung, beispielsweise unter Verwendung eines Lasers. Eine optische Nachrichtenübertragung weist insbesondere den Vorteil einer hohen Datenübertragungsgeschwindigkeit und einer hohen elektromagnetischen Verträglichkeit (EMV) auf.

Gemäß Erfindung ist die Drohne als Slave, insbesondere als EtherCAT-Slave, konfiguriert.

In einer Ausführungsform weist die Drohne eine oder mehrere Abschirmeinrichtungen auf, um beispielsweise Windbelastungen für das zu transportierende oder zu bearbeitende Werkstück zu minimieren.

In einer Ausführungsform ist vorgesehen, dass die Drohne jeweils eine autonome Energieversorgung sowohl für den Flugbetrieb als auch für einen angeordneten Aktor respektive Sensor aufweist.

In einer Ausführungsform wird ein Energiemanagement der Drohne mittels der Steuerungseinrichtung gesteuert. Sollte beispielsweise eine Speicherkapazität einer Energieversorgung für den Flugbetrieb enden, stellt die Steuerungseinrichtung automatisch auf eine Energieversorgung für einen Aktor respektive Sensor um, um einen Flugbetrieb sicherzustellen respektive aufrechtzuerhalten.

In einer Ausführungsform ist vorgesehen, dass die Steuerungseinrichtung einen Ist-Zustand der Drohne überwacht. Die Steuerungseinrichtung führt also ein "Condition Monitoring" durch. Die Steuerungseinrichtung überwacht die Drohne beispielsweise hinsichtlich eines Energieverbrauchs respektive einer verbleibenden Flugzeit (Restflugzeit) und/oder möglicher Schäden am Aktor respektive am Sensor respektive an Einheiten, beispielsweise an einem Propeller, der Drohne.

Die Drohne ist beispielsweise ausgebildet, auf mögliche Kollisionen autonom zu reagieren, beispielsweise mittels der eigenen Steuerung.

In einer Ausführungsform umfasst das Luftfahrzeug einen Barcodescanner. Das Luftfahrzeug kann somit in vorteilhafter Weise als ein fliegender Barcodescanner als Bestandteil einer Fertigungsstraße eingesetzt werden.

In einer Ausführungsform umfasst das Luftfahrzeug eine Kamera, insbesondere eine Videokamera. Das Luftfahrzeug kann somit in vorteilhafter Weise als fliegende Kamera als Bestandteil einer Fertigungstrasse eingesetzt werden.

In einer Ausführungsform transportiert das Luftfahrzeug Werkstücke respektive Fertigungsmaterialien. Beispielsweise transportiert das Luftfahrzeug als auszuführende Aufgabe Beschlagteile in einer Möbelfertigung und setzt diese in ein Möbel.

In einer Ausführungsform sind als auszuführende Aufgabe eine Entnahme und ein Wegtransport von Werkstücken aus einer Fertigungsanlage mittels des Luftfahrzeugs vorgesehen.

In einer nicht beanspruchten Ausführungsform umfasst das Luftfahrzeug einen Bearbeitungskopf einer Schneidmaschine, insbesondere einer Laserschneidmaschine. Das Luftfahrzeug kann somit in vorteilhafter Weise als fliegender Bearbeitungskopf einer Schneidmaschine verwendet werden.

In einer nicht beanspruchten Ausführungsform umfasst das Luftfahrzeug einen Arbeitskopf eines 3D-Druckers. Das Luftfahrzeug kann somit in vorteilhafter Weise als fliegender Arbeitskopf eines 3D Druckers verwendet werden.

In einer nicht beanspruchten Ausführungsform ist vorgesehen, dass das Luftfahrzeug als auszuführende Aufgabe einzelne Werkstücke nachbearbeitet.

In einer nicht beanspruchten Ausführungsform ist vorgesehen, dass das Luftfahrzeug als auszuführende Aufgabe nicht vollständig gefüllte Verpackungseinheiten auffüllt.

In einer nicht beanspruchten Ausführungsform ist vorgesehen, dass das Luftfahrzeug als auszuführende Aufgabe chemische und/oder andere Analysen während des Flugbetriebs seiner Umgebung durchführt.

In einer nicht beanspruchten Ausführungsform sind als auszuführende Aufgabe ein Einschleusen und/oder Tauschen von Werkstückreihenfolgen auf einer Transportstrecke mittels des Luftfahrzeugs vorgesehen.

In einer Ausführungsform weist das Luftfahrzeug neben den Aktoren respektive Sensoren für die eigentliche Aufgabe zusätzliche Sensoren auf, um beispielsweise im Vorbeiflug eventuelle Störungen und/oder andere "Condition Monitoring"-Aufgaben (Zustandsüberwachungs-Aufgaben) in Bezug auf Automatisierungskomponenten, an denen das Luftfahrzeug vorbeifliegt, zu erfassen respektive durchzuführen und der Erfassung entsprechende Daten (beispielsweise Umfeldsensordaten) an die Steuerungseinrichtung zu übermitteln.

## Patentansprüche

1. Automatisierungssystem (10), umfassend:
zumindest eine Maschine (70, 80, 90), die eine oder mehrere Bewegungsachsen umfasst,
zumindest ein unbemanntes Luftfahrzeug (40, 40a, 40b, 40c, 40d),
eine Steuerungseinrichtung (20), die ausgebildet ist, die Maschine (70, 80, 90) und das unbemannte Luftfahrzeug (40, 40a, 40b, 40c, 40d) zur Unterstützung eines Betriebs der Maschine zu steuern, wobei die Steuerungseinrichtung (20) und das unbemannte Luftfahrzeug (40, 40a, 40b, 40c, 40d) über ein Kommunikationsnetzwerk miteinander kommunizieren, wobei das unbemannte Luftfahrzeug (40, 40a, 40b, 40c, 40d) als eine weitere Bewegungsachse mittels der Steuerungseinrichtung (20) in die Steuerung der Maschine (70, 80, 90) mit eingebunden ist, und
wobei das Kommunikationsnetzwerk ein Bussystem, insbesondere ein EtherCAT-Bussystem ist und das unbemannte Luftfahrzeug als Slave, insbesondere als EtherCAT-Slave konfiguriert ist,
wobei die Steuerungseinrichtung eine CNC-Steuerungseinrichtung ist und eine Flugbahn des unbemannten Luftfahrzeugs (40, 40a, 40b, 40c, 40d) über G-Code -Befehle programmiert wird.

2. Automatisierungssystem (10) nach Anspruch 1, wobei die Steuerungseinrichtung (20) ausgebildet ist, Steuerungsdaten zur Steuerung des unbemannten Luftfahrzeugs (40, 40a, 40b, 40c, 40d) für das unbemannte Luftfahrzeug (40, 40a, 40b, 40c, 40d) zu ermitteln, wobei die Steuerungsdaten eine mittels des unbemannten Luftfahrzeugs (40, 40a, 40b, 40c, 40d) auszuführende Aufgabe zur Unterstützung des Betriebs der Maschine angeben, wobei das unbemannte Luftfahrzeug (40, 40a, 40b, 40c, 40d) ausgebildet ist, die auszuführende Aufgabe basierend auf den Steuerungsdaten mittels der Steuerungseinrichtung (20) ferngesteuert auszuführen.

3. Automatisierungssystem (10) nach Anspruch 2, wobei die Aufgabe eine oder mehrere der folgenden Aufgaben umfasst:
Transportieren eines Gegenstands zu der Maschine, Transportieren eines Gegenstands von der Maschine zu einem vorbestimmten Ort, Abholen eines Gegenstands von einem vorbestimmten Ort und Transportieren des Gegenstands zu der Maschine, Prüfen zumindest einer Eigenschaft eines mittels der Maschine hergestellten Produkts, Reparieren und/oder Nachbearbeiten eines mittels der Maschine hergestellten fehlerhaften Produkts, Auffüllen einer mittels der Maschine nicht vollständig aufgefüllten Verpackungseinheit, Einschleusen und/oder Tauschen einer Reihenfolge von mittels der Maschine zu bearbeitenden Gegenständen, Erfassen der Maschine und/oder eines Umfelds der Maschine mittels eines Umfeldsensors des unbemannten Luftfahrzeugs (40, 40a, 40b, 40c, 40d) und Übermitteln der Erfassung entsprechender Umfeldsensordaten an die Steuerungseinrichtung (20).

4. Automatisierungssystem (10) nach einem der vorherigen Ansprüche, wobei das unbemannte Luftfahrzeug (40, 40a, 40b, 40c, 40d) und/oder die Steuerungseinrichtung (20) ausgebildet sind, eine momentane Position des unbemannten Luftfahrzeugs (40, 40a, 40b, 40c, 40d) zu bestimmen, wobei die Steuerungseinrichtung (20) ausgebildet ist, basierend auf der momentanen Position des unbemannten Luftfahrzeugs (40, 40a, 40b, 40c, 40d) das unbemannte Luftfahrzeug (40, 40a, 40b, 40c, 40d) zu steuern.

5. Automatisierungssystem (10) nach Anspruch 4, wobei das unbemannte Luftfahrzeug (40, 40a, 40b, 40c, 40d) ausgebildet ist, während eines Flugs ein Umfeld des Luftfahrzeugs (40, 40a, 40b, 40c, 40d) zu erfassen, wobei das unbemannte Luftfahrzeug (40, 40a, 40b, 40c, 40d) und/oder die Steuerungseinrichtung (20) ausgebildet sind, eine digitale Karte des Umfelds basierend auf dem erfassten Umfeld zu erstellen und die momentane Position des unbemannten Luftfahrzeugs (40, 40a, 40b, 40c, 40d) innerhalb der digitalen Karte zu bestimmen.

6. Automatisierungssystem (10) nach Anspruch 5, wobei das unbemannte Luftfahrzeug (40, 40a, 40b, 40c, 40d) und/oder die Steuerungseinrichtung (20) ausgebildet sind, die digitale Karte des Umfelds unter Verwendung eines SLAM-Verfahrens zu erstellen.

7. Automatisierungssystem (10) nach einem der vorherigen Ansprüche, wobei die Steuerungseinrichtung (20) ausgebildet ist, ein Energiemanagement des unbemannten Luftfahrzeugs (40, 40a, 40b, 40c, 40d) zu steuern.

8. Automatisierungssystem (10) nach Anspruch 7, wobei das unbemannte Luftfahrzeug (40, 40a, 40b, 40c, 40d) eine erste Energieversorgung ausschließlich für einen Flugbetrieb und eine zweite Energieversorgung für einen Aktor und/oder einen Sensor aufweist, wobei die Steuerungseinrichtung (20) ausgebildet ist, bei einem Unterschreiten einer Speicherkapazität der ersten Energieversorgung unter einem vorgegebenen Speicherkapazitätsschwellwert für ein Aufrechterhalten des Flugbetriebs von der ersten Energieversorgung auf die zweite Energieversorgung umzuschalten.

9. Automatisierungssystem (10) nach einem der vorherigen Ansprüche, wobei die Steuerungseinrichtung (20) ausgebildet ist, einen Ist-Zustand, beispielsweise Energieverbrauch, Restflugzeit, des unbemannten Luftfahrzeugs (40, 40a, 40b, 40c, 40d) zu überwachen und basierend auf dem Ist-Zustand das unbemannte Luftfahrzeug (40, 40a, 40b, 40c, 40d) zu steuern.

10. Automatisierungssystem (10) nach einem der vorherigen Ansprüche, wobei mehrere unbemannte Luftfahrzeuge (40, 40a, 40b, 40c, 40d) vorgesehen sind, wobei die Steuerungseinrichtung (20) ausgebildet ist, die mehreren unbemannten Luftfahrzeuge (40, 40a, 40b, 40c, 40d) derart zu steuern, dass eines der mehreren unbemannten Luftfahrzeuge (40, 40a, 40b, 40c, 40d) an einer Ladestation mit elektrischer Energie für einen Flugbetrieb und/oder für einen Sensor und/oder einen Aktor versorgt wird, während die restlichen der mehreren unbemannten Luftfahrzeuge (40, 40a, 40b, 40c, 40d) in einem Flugbetrieb betrieben werden.

11. Verfahren zum Betreiben eines Automatisierungssystems (10) nach einem der vorherigen Ansprüche, umfassend:
Steuern (301; 303) des unbemannten Luftfahrzeugs (40, 40a, 40b, 40c, 40d) mittels der Steuerungseinrichtung (20) zur Unterstützung eines Betriebs der Maschine.

## Claims

1. Automation system (10), comprising:
at least one machine (70, 80, 90) that comprises one or more movement axes,
at least one unmanned aircraft (40, 40a, 40b, 40c, 40d),
a control device (20) designed to control the machine (70, 80, 90) and the unmanned aircraft (40, 40a, 40b, 40c, 40d) to support a mode of the machine, the control device (20) and the unmanned aircraft (40, 40a, 40b, 40c, 40d) communicating with one another via a communication network,
wherein the unmanned aircraft (40, 40a, 40b, 40c, 40d) as a further movement axis is also involved in controlling the machine (70, 80, 90) by means of the control device (20), and
wherein the communication network is a bus system, in particular an EtherCat bus system, and the unmanned aircraft is configured as a slave, in particular as an EtherCat slave,
the control device being a CNC control device and a flight path of the unmanned aircraft (40, 40a, 40b, 40c, 40d) being programmed using G-code commands.

2. Automation system (10) according to Claim 1,
wherein the control device (20) is designed to determine control data for controlling the unmanned aircraft (40, 40a, 40b, 40c, 40d) for the unmanned aircraft (40, 40a, 40b, 40c, 40d), the control data specifying a task to be carried out by means of the unmanned aircraft (40, 40a, 40b, 40c, 40d) to support the mode of the machine, the unmanned aircraft (40, 40a, 40b, 40c, 40d) being designed to take the control data as a basis for using remote control by means of the control device (20) to carry out the task to be carried out.

3. Automation system (10) according to Claim 2,
wherein the task comprises one or more of the following tasks: transporting an object to the machine, transporting an object from the machine to a predetermined location, fetching an object from a predetermined location and transporting the object to the machine, checking at least one property of a product produced by means of the machine, repairing and/or reworking a faulty product produced by means of the machine, filling a packaging unit which is not completely filled by means of the machine, introducing and/or exchanging a sequence of objects to be processed by means of the machine, detecting the machine and/or an environment of the machine by means of an environment sensor of the unmanned aircraft (40, 40a, 40b, 40c, 40d) and transmitting environment sensor data corresponding to the detection to the control device (20).

4. Automation system (10) according to one of the preceding claims, wherein the unmanned aircraft (40, 40a, 40b, 40c, 40d) and/or the control device (20) are/is designed to determine an instantaneous position of the unmanned aircraft (40, 40a, 40b, 40c, 40d), the control device (20) being designed to control the unmanned aircraft (40, 40a, 40b, 40c, 40d) on the basis of the instantaneous position of the unmanned aircraft (40, 40a, 40b, 40c, 40d).

5. Automation system (10) according to Claim 4,
wherein the unmanned aircraft (40, 40a, 40b, 40c, 40d) is designed to detect an environment of the aircraft (40, 40a, 40b, 40c, 40d) during a flight, the unmanned aircraft (40, 40a, 40b, 40c, 40d) and/or the control device (20) being designed to create a digital map of the environment on the basis of the detected environment and to determine the instantaneous position of the unmanned aircraft (40, 40a, 40b, 40c, 40d) within the digital map.

6. Automation system (10) according to Claim 5,
wherein the unmanned aircraft (40, 40a, 40b, 40c, 40d) and/or the control device (20) are/is designed to create the digital map of the environment using a SLAM method.

7. Automation system (10) according to one of the preceding claims, wherein the control device (20) is designed to control an energy management of the unmanned aircraft (40, 40a, 40b, 40c, 40d).

8. Automation system (10) according to Claim 7,
wherein the unmanned aircraft (40, 40a, 40b, 40c, 40d) has a first energy supply exclusively for a flight mode and a second energy supply for an actuator and/or a sensor, the control device (20) being designed so as, when a storage capacity of the first energy supply falls below a predetermined storage capacity threshold value, to switch from the first energy supply to the second energy supply to maintain the flight mode.

9. Automation system (10) according to one of the preceding claims, wherein the control device (20) is designed to monitor an actual state, for example energy consumption or residual flying time, of the unmanned aircraft (40, 40a, 40b, 40c, 40d) and to control the unmanned aircraft (40, 40a, 40b, 40c, 40d) on the basis of the actual state.

10. Automation system (10) according to one of the preceding claims, wherein a plurality of unmanned aircraft (40, 40a, 40b, 40c, 40d) are provided, the control device (20) being designed to control the plurality of unmanned aircraft (40, 40a, 40b, 40c, 40d) in such a way that one of the plurality of unmanned aircraft (40, 40a, 40b, 40c, 40d) is supplied, at a charging station, with electrical energy for a flight mode and/or for a sensor and/or an actuator, while the remainder of the plurality of unmanned aircraft (40, 40a, 40b, 40c, 40d) are operated in a flight mode.

11. Method for operating an automation system (10) according to one of the preceding claims, comprising:
controlling (301; 303) the unmanned aircraft (40, 40a, 40b, 40c, 40d) by means of the control device (20) to support a mode of the machine.

## Revendications

1. Système d'automatisation (10), comprenant :
au moins une machine (70, 80, 90) qui comprend un ou plusieurs axes de mouvement,
au moins un aéronef sans pilote (40, 40a, 40b, 40c, 40d),
un dispositif de commande (20) qui est réalisé pour commander la machine (70, 80, 90) et l'aéronef sans pilote (40, 40a, 40b, 40c, 40d) afin d'assister un fonctionnement de la machine, dans lequel le dispositif de commande (20) et l'aéronef sans pilote (40, 40a, 40b, 40c, 40d) communiquent ensemble par un réseau de communication,
dans lequel l'aéronef sans pilote (40, 40a, 40b, 40c, 40d) est intégré dans la commande de la machine (70, 80, 90) comme un axe de mouvement supplémentaire au moyen du dispositif de commande (20), et
dans lequel le réseau de communication est un système de bus, en particulier un système de bus EtherCAT, et l'aéronef sans pilote est configuré comme esclave, en particulier comme esclave EtherCAT,
dans lequel le dispositif de commande est un dispositif de commande CNC, et une trajectoire de vol de l'aéronef sans pilote (40, 40a, 40b, 40c, 40d) est programmée par des instructions de code G.

2. Système d'automatisation (10) selon la revendication 1, dans lequel le dispositif de commande (20) est réalisé pour établir des données de commande pour commander l'aéronef sans pilote (40, 40a, 40b, 40c, 40d) pour l'aéronef sans pilote (40, 40a, 40b, 40c, 40d), dans lequel les données de commande indiquent une tâche à effectuer au moyen de l'aéronef sans pilote (40, 40a, 40b, 40c, 40d) pour assister le fonctionnement de la machine, dans lequel l'aéronef sans pilote (40, 40a, 40b, 40c, 40d) est réalisé pour effectuer la tâche de manière télécommandée sur la base des données de commande au moyen du dispositif de commande (20).

3. Système d'automatisation (10) selon la revendication 2, dans lequel la tâche comprend une ou plusieurs des tâches suivantes :
transporter un objet jusqu'à la machine, transporter un objet de la machine à un endroit prédéterminé, enlever un objet à un endroit prédéterminé et transporter l'objet jusqu'à la machine, vérifier au moins une propriété d'un produit fabriqué au moyen de la machine, réparer et/ou reprendre un produit défectueux fabriqué au moyen de la machine, remplir une unité de conditionnement qui n'a pas été complètement remplie au moyen de la machine, insérer et/ou permuter une séquence d'objets à traiter au moyen de la machine, détecter la machine et/ou un environnement de la machine au moyen d'un capteur d'environnement de l'aéronef sans pilote (40, 40a, 40b, 40c, 40d) et transmettre la détection de données de capteur d'environnement correspondantes au dispositif de commande (20).

4. Système d'automatisation (10) selon l'une quelconque des revendications précédentes, dans lequel l'aéronef sans pilote (40, 40a, 40b, 40c, 40d) et/ou le dispositif de commande (20) sont réalisés pour déterminer une position momentanée de l'aéronef sans pilote (40, 40a, 40b, 40c, 40d), dans lequel le dispositif de commande (20) est réalisé pour commander l'aéronef sans pilote (40, 40a, 40b, 40c, 40d) sur la base de la position momentanée de l'aéronef sans pilote (40, 40a, 40b, 40c, 40d).

5. Système d'automatisation (10) selon la revendication 4, dans lequel l'aéronef sans pilote (40, 40a, 40b, 40c, 40d) est réalisé pour détecter pendant un vol un environnement de l'aéronef sans pilote (40, 40a, 40b, 40c, 40d), dans lequel l'aéronef sans pilote (40, 40a, 40b, 40c, 40d) et/ou le dispositif de commande (20) sont réalisés pour créer une carte numérique de l'environnement sur la base de l'environnement détecté et pour déterminer la position momentanée de l'aéronef sans pilote (40, 40a, 40b, 40c, 40d) à l'intérieur de la carte numérique.

6. Système d'automatisation (10) selon la revendication 5, dans lequel l'aéronef sans pilote (40, 40a, 40b, 40c, 40d) et/ou le dispositif de commande (20) sont réalisés pour créer la carte numérique de l'environnement en utilisant un procédé SLAM.

7. Système d'automatisation (10) selon l'une quelconque des revendications précédentes, dans lequel le dispositif de commande (20) est réalisé pour commander une gestion d'énergie de l'aéronef sans pilote (40, 40a, 40b, 40c, 40d).

8. Système d'automatisation (10) selon la revendication 7, dans lequel l'aéronef sans pilote (40, 40a, 40b, 40c, 40d) présente une première alimentation en énergie réservée à un fonctionnement en vol et une deuxième alimentation en énergie pour un actionneur et/ou un capteur, dans lequel le dispositif de commande (20) est réalisé pour commuter de la première alimentation en énergie sur la deuxième alimentation en énergie en vue de maintenir le fonctionnement en vol si une capacité de stockage de la première alimentation en énergie devient inférieure à une valeur seuil de capacité de stockage prédéfinie.

9. Système d'automatisation (10) selon l'une quelconque des revendications précédentes, dans lequel le dispositif de commande (20) est réalisé pour surveiller un état réel, par exemple une consommation d'énergie, un temps de vol restant, de l'aéronef sans pilote (40, 40a, 40b, 40c, 40d) et pour commander l'aéronef sans pilote (40, 40a, 40b, 40c, 40d) sur la base de l'état réel.

10. Système d'automatisation (10) selon l'une quelconque des revendications précédentes, dans lequel plusieurs aéronefs sans pilote (40, 40a, 40b, 40c, 40d) sont prévus,
dans lequel le dispositif de commande (20) est réalisé pour commander les plusieurs aéronefs sans pilote (40, 40a, 40b, 40c, 40d) de telle sorte que l'un des plusieurs aéronefs sans pilote (40, 40a, 40b, 40c, 40d) est alimenté en énergie électrique au niveau d'une station de charge pour un fonctionnement en vol et/ou pour un capteur et/ou pour un actionneur alors que les plusieurs aéronefs sans pilote restants (40, 40a, 40b, 40c, 40d) sont en fonctionnement en vol.

11. Procédé permettant de faire fonctionner un système d'automatisation (10) selon l'une quelconque des revendications précédentes, comprenant l'étape consistant à :
commander (301 ; 303) l'aéronef sans pilote (40, 40a, 40b, 40c, 40d) au moyen du dispositif de commande (20) pour assister un fonctionnement de la machine.
